# EUROPÄISCHE PATENTSCHRIFT

(11) **EP 0 639 325 B1**
(45) Veröffentlichungstag und Bekanntmachung des Hinweises auf die Patenterteilung: **07.04.1999**
(21) Anmeldenummer: 94112100.6
(22) Anmeldetag: 03.08.1994
(51) Int. Cl.: A01G 25/16, F16K 11/072

(54) **Fluidverteiler, insbesondere zur Wasserverteilung in Bewässerungseinrichtungen**
Fluid distributor, in particular for irrigation of soils
Distributeur de fluide, en particulier pour l'irrigation de sols

(30) Priorität: 17.08.1993 DE 4327618
(43) Veröffentlichungstag der Anmeldung: 22.02.1995
(73) Patentinhaber: GARDENA Kress + Kastner GmbH, D-89079 Ulm (DE)
(72) Erfinder:
(74) Vertreter: Patentanwälte Ruff, Beier, Schöndorf und Mütschele

(56) Entgegenhaltungen:
- EP-A- 0 037 746
- AU-B- 562 073
- FR-A- 2 623 593

## Beschreibung

Die Erfindung betrifft einen Fluid-Verteiler nach dem Oberbegriff des Patentanspruchs 1. Mit dem Verteiler können wahlweise ein oder mehrere Fluid-Ausgänge mit mindestens einem Fluideingang leitungsverbunden und/oder andere Steuervorgänge ausgeführt werden. Hierzu kann der Fluid-Verteiler ein mechanisches Stell- bzw. Schaltwerk und/oder einen Antrieb aufweisen, dessen Antriebsenergie zweckmäßig nicht von einem mechanischen oder elektrischen Motor, sondern von einer Fluid-Strömung bzw. einem Fluid-Druck abgeleitet ist, so daß der Antrieb bzw. das Steuerwerk durch Sperren bzw. Öffnen einer Versorgungsleitung für den Fluid-Verteiler betrieben werden kann.

Im Falle von Wasserverteilern für Bewässerungseinrichtungen kann der Fluideingang an einen Wasserhahn des Wasser-Leitungsnetzes angeschlossen werden, während Fluid-Ausgänge über Leitungen wie flexible Gartenschläuche an einzelne, gesonderte Verbraucher angeschlossen werden, z.B. Bewässerungsregner, Tropfenspender o. dgl., deren Durchflußquerschnitt meist wesentlich kleiner als der Durchflußquerschnitt der zugehörigen Verbindungsleitung bis zum Sperrbereich des Fluidverteilers ist, so daß sich bei Zuführung von Druckwasser ein Rückstaudruck bis in den Fluid-Verteiler hinein ergibt. Bei unterbrochener Wasserzufuhr bzw. bei Zufuhr von Wasser mit einem unterhalb eines vorbestimmten Arbeitsdruckes liegenden Druck befindet sich der Fluid-Verteiler in der Ausgangsstellung, in welcher das Steuerwerk bzw. der Antrieb nicht in Gang gesetzt wird, sondern ebenfalls in seiner Ausgangsstellung verbleibt. In dieser ist der Fluideingang mit mindestens einem Fluidausgang leitungsverbunden, während weitere bzw. alle übrigen Fluidausgänge gegen den Wasserdurchfluß gesperrt sind.

Ist dabei z.B. nach der AU-B-562 073 der freigegebene Fluidausgang nur auf einem Teil desjenigen Durchflußquerschnittes geöffnet, der für den normalen Dauerbetrieb vorgesehen ist, so muß durch das Öffnen der Wasserzufuhr zunächst ein Schaltschritt des Schrittschaltwerkes bewirkt werden, um den Durchflußquerschnitt vollends auf seine Betriebsgröße zu erweitern. Das einfließende Wasser muß daher, bevor es in den Fluidausgang gelangt, zuerst den Antrieb beaufschlagen, bewegen und durchströmen. Dabei können sich ungünstige Strömungsverhältnisse bzw. Druckverluste ergeben, die zur Verringerung der Wassermenge führen, die dem Verbraucher zugeführt wird. Außerdem ist, um den Betriebs-Durchflußquerschnitt zu erhalten, das Wasser mit einem so ausreichend hohen Druck zuzuführen, daß es einen Schaltvorgang bewirkt, weshalb gerade bei Druckabfall im Leitungsnetz der Betriebs-Durchflußquerschnitt nicht zu erreichen ist.

Des weiteren führt bei einer solchen Ausbildung das Schrittschaltwerk einen Schaltvorgang bei ansteigendem Wasserdruck aus, durch welchen das Gehäuse des Fluidverteilers sowie die Lagerungen der beweglichen Teile unter Spannung gesetzt werden. Der Antrieb bzw. das Schrittschaltwerk arbeitet gegen eine Rückstellfeder, durch die Antriebsenergie des ansteigenden Wasserdruckes o. dgl. vorgespannt wird, gleichzeitig wird jedoch auch Antriebsenergie für einen Schaltvorgang des Schrittschaltwerkes benötigt. Das Schrittschaltwerk befindet sich in einem Raum, in welchen Fluid nicht nur einfließen, sondern in der Betriebslage auch wieder ausfließen kann, so daß sich nach und nach mehr Schmutz ablagert, wodurch sich ebenfalls Störanfälligkeiten ergeben.

Der Erfindung liegt auch die Aufgabe zugrunde, einen Fluid-Verteiler zu schaffen, bei welchem Nachteile bekannter Ausbildungen oder der beschriebenen Art vermieden sind und der insbesondere bei kompakter Ausbildung eine hohe Funktionssicherheit gewährleistet bzw. bei Inbetriebnahme eine schnelle Wasserzuführung zum jeweiligen Fluidausgang ohne wesentliche Druckverluste sicherstellt.

Erfindungsgemäß sind die Merkmale nach Patentanspruch 1 vorgesehen. Wird ein Teilweg der Arbeitsbewegung nicht zum Antrieb der Schaltbewegung herangezogen, so kann die dadurch freigestellte Antriebsenergie für andere Steuervorgänge, z.B. zum Aufladen eines Energiespeichers, wie einer Antriebsfeder, verwendet werden, von welcher dann anschließend Antriebsleistung für eine Schaltbewegung o. dgl. abgeführt werden kann.

Fällt der genannte Teilweg mit einem drehenden und/oder linearen Vorhub zusammen, so kann der Rückhub dann während des restlichen Teilweges der Arbeitsbewegung durch die vorgespannte Feder angetrieben und nur dabei auch die Schaltbewegung angetrieben werden. So ergeben sich unabhängig vom Wasserdruck stets etwa konstante bzw. gleiche Antriebsverhältnisse für das Steuerwerk, weil der Schaltvorgang durch Druckabfall ausgelöst wird.

Ist das Steuerwerk so ausgebildet, daß es bei ausreichendem Druckabfall im Fluidverteiler in eine solche Steuerstellung zurückkehrt, in welcher es den Durchflußquerschnitt des angesteuerten Fluidausganges auf voller Betriebsweite öffnet, so kann bei darauffolgend wieder einsetzender Wasserzufuhr der zugehörige Verbraucher sofort über den vollen Duchflußquerschnitt mit Wasser versorgt werden, ohne daß zuvor ein Schaltvorgang erforderlich ist.

Insbesondere im zuletzt genannten Fall kann auch die Antriebsleistung für den Antrieb teilweise oder vollständig von demjenigen Rückstudruck abgeleitet werden, der sich nach Öffnen der Wasserzufuhr vom zugehörigen Verbraucher bis in den geöffneten Fluidausgang bzw. die geöffnete Sperröffnung hinein aufbaut, so daß das Wasser zuerst bis zum Verbraucher fließt und erst nach ausreichendem Druckaufbau im Verbraucher der Antrieb in Bewegung gesetzt wird.

Die Funktionssicherheit der Steuervorgänge kann auch wesentlich dadurch erhöht werden, daß zumindest Teile des Steuerwerkes bzw. des Antriebes so angeordnet sind, daß sie nicht wiederholt einem Fluidaustausch und damit der wiederholten Zuführung von Schmutzpartikeln o. dgl. ausgesetzt sind. Können zumindest Teile des Steuerwerkes bzw. des Antriebes von der Außenseite des Fluidverteilers durch unmittelbaren manuellen Zugriff bewegt werden, so kann nicht nur die Gängigkeit geprüft oder nach Blockierung durch Betätigung wieder hergestellt werden, sondern der Fluidverteiler läßt sich auch unabhängig vom Betriebszustand jederzeit auf jede beliebige weitere Schaltstellung bzw. jeden weiteren Fluidausgang umstellen.

Die jeweilige Schaltstellung wird vorteilhaft durch Anzeigemittel angezeigt, welche jedem Fluidausgang zugeordnete Symbole und einen gegenüber diesen synchron mit dem Steuerwerk bewegbaren Zeiger aufweisen können.

Ebenfalls unabhängig von den beschriebenen Ausbildungen ist es auch vorteilhaft, wenn für den Betriebsdruck im Fluidverteiler Anzeigemittel vorgesehen sind, so daß von der Außenseite des Fluidverteilers her erkannt werden kann, ob er unter Fluiddruck steht oder nicht. Im Falle einer Analoganzeige kann dabei festgestellt werden, ob der zur Betätigung des Antriebes erforderliche Wasserdruck schon erreicht ist oder nicht.

Der Fluidverteiler ist zweckmäßig als Boden-Standgerät ausgebildet und mit einer Standfläche an der Unterseite versehen, wobei der jeweilige Fluidausgang zweckmäßig nicht parallel zur Mittelachse dieser Standfläche, sondern in einer davon abweichenden, zur Standfläche geneigten oder parallelen Ebene vorgesehen ist. Liegt der jeweilige Fluidausgang mit einem gegenüber seiner Außenseite nur höchstens etwa gleichgroßen Abstand sehr nahe oberhalb der Standfläche, so tragen die an die Fluidausgänge angeschlossenen Leitungen nach Art sternförmig ausragender, ggfs. flexibler, Stützfüße, zur Standfestigkeit des Fluidverteilers wesentlich bei.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:

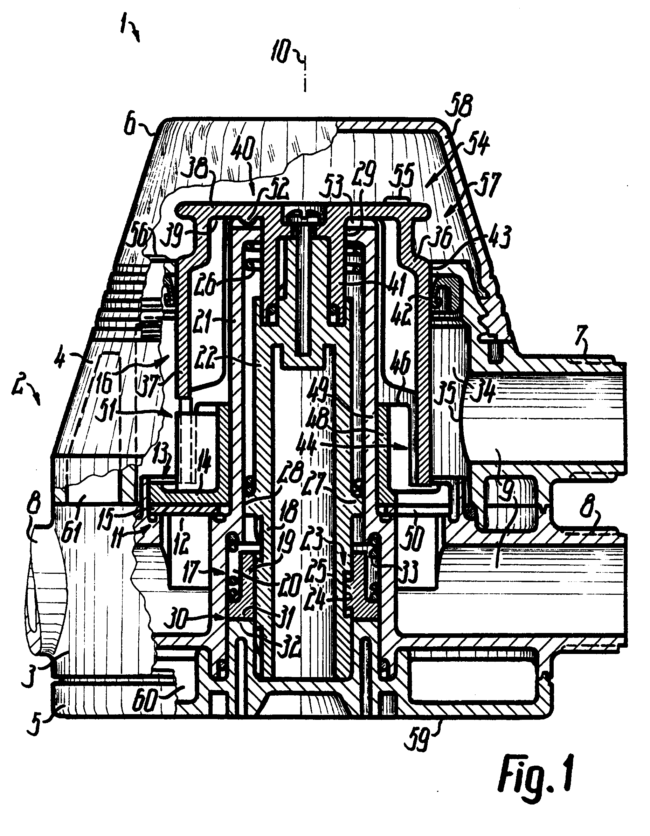

- Fig. 1: einen erfindungsgemäßen Fluidverteiler in teilweise geschnittener Ansicht und in Ruhe- bzw. Ausgangsstellung,
- Fig. 2: den Fluidverteiler gemäß Fig. 1 in Betriebsstellung und in einer gegenüber Fig. 1 verdrehten Lage und
- Fig. 3: wesentliche Bauteile des Fluidverteilers in explodierter Darstellung.

Der Fluidverteiler 1 weist als Grundkörper ein Gehäuse 2 auf, das aus einem unteren Basiskörper 3 und einem auf dessen Oberseite aufgesetzten Deckelkörper 4 sowie einem die Unterseite des Basiskörpers 3 verschließenden Deckel 5 zusammengesetzt ist. Die Oberseite des Gehäuses 2 ist mit einer kegelstumpfförmigen Verschlußkappe 6 abdeckbar, die mit einem an ihrem Kappenmantel vorgesehenen Gewinde so auf die Oberseite des kegelstumpfförmigen Deckelkörpers 4 aufgeschraubt ist, daß ihr Außenumfang eine annäherend kontinuierliche Fortsetzung des Außenumfanges des Gehäuses 2 bzw. des Deckelkörpers 4 bildet.

Im Mantel des Deckelkörpers 4 ist ein annähernd radialer Fluideingang 7 in Form eines radial über den Außenumfang vorstehenden Anschlußstutzens für eine Wasserleitung, wie einen flexiblen Schlauch vorgesehen, der mit einem Filtersieb für das zufließende Wasser und/oder mit einer Schlauchkupplung versehen sein kann. Mit einem gegenüber seiner Außenseite kleineren Abstand unterhalb des Fluideinganges 7 sind sternförmig etwa radial um die zentrale bzw. vertikale Achse 10 des Fluidverteilers 1 liegende Fluidausgänge 8 vorgesehen, die ebenfalls durch radial vorstehende Anschlußstutzen gebildet sind und in einer gemeinsamen, zur Achse 10 rechtwinkligen Mittelebene liegen können. Auf diese Anschlußstutzen können ggfs. ventilartig manuell absperrbare Anschlußkupplungen für Gartenschläuche und/oder dicht schießende Verschlußkappen aufgesetzt, insbesondere aufgeschraubt werden, so daß im Nichtgebrauchsfall einzelne Fluidausgänge 8 gehen Wasseraustritt druckdicht verschlossen werden können.

Der Fluideingang 7 ist mit allen Fluidausgängen 8 über Fluidführungen 9 leitungsverbindbar, wobei die Fluidführung bis zu einem Sperrbereich 11 gemeinsam und ab dem Sperrbereich 11 für jeden Fluidausgang 8 gesondert vorgesehen ist. Im Sperrbereich 11 ist für jeden Fluidausgang 8 eine gesonderte Sperröffnung 12 vorgesehen, wobei die Sperröffnungen im wesentlichen mit gleichen Radialabständen und gleichmäßig um die Achse 10 verteilt in einer zur Achse 10 etwa rechtwinkligen Ebene liegen. Jede Sperröffnung 12 ist durch einen von der Bodenfläche des zugehörigen Fluidausganges 8 nach oben ausgehenden Abzweigkanal gebildet und weist einen gegenüber dem übrigen Fluidausgang 8 kleineren Durchflußquerschnitt auf. Jeweils eine Sperröffnung 12 ist geöffnet, während alle übrigen Sperröffnungen 12 verschlossen sind.

Hierfür ist ein für alle Sperröffnungen 12 gemeinsames Sperrorgan 13 vorgesehen, das mit einer an einer ringförmigen Sperrscheibe 14 anliegenden Dichtung 15 ringlippenförmig vorstehende und die jeweilige Sperröffnung 12 begrenzende Ventilsitze verschließen kann. Die Fluidausgänge 8, die Ventilsitze und die Lagerung des Sperrorganes 13 sind am Basiskörper 3 vorgesehen bzw. einteilig mit diesem ausgebildet. Im Bereich der jeweils geöffneten Sperröffnung 12 sind die Sperrscheibe 14 und die Dichtung 15 mit einem gemeinsamen Durchlaß versehen, der etwa gleichen Durchlaßquerschnitt wie die zugehörige Sperröffnung 12 hat. Zweckmäßig haben die Sperröffnungen wie auch der Durchlaß eine von der kreisrunden Form abweichende, z.B. annähernd trapezförmige bzw. radial nach außen erweiterte Form, deren Basiskante sowie gegenüberliegende Kante etwa um die Achse 10 gekrümmt sind, während die seitlichen und im spitzen Winkel zueinander liegenden Begrenzungen etwa in Axialebenen der Achse 10 vorgesehen sind. Der Sperrteller 14 liegt etwa in der Teilungsebene zwischen Basiskörper 3 und Deckelkörper 4.

Zum Antrieb des Fluidverteilers 1, insbesondere zum Weiterschalten des Sperrorganes 13 gegenüber den Sperröffnungen 12 sind ein Antrieb 16 und ein Schaltwerk 17, nämlich ein hydraulischer Fluidantrieb und ein mechanisches Schrittwerk vorgesehen. Das Schaltwerk 17 weist etwa in der Achse 10 bzw. parallel zu dieser bewegbar ein angetriebenes Stellglied 18 und ein in dieses eingreifendes Gegen-Stellglied 19 auf, die auch um ihre Achse gegenüber dem Gehäuse 2 drehbar gelagert sind. Die Stellglieder 18, 19 befinden sich in einer von den Fluidführungen 9 vollständig getrennten, zentral innerhalb der Fluidführung 9 liegenden Steuerkammer 20, die von einem hohlen Schaft 21 des Basiskörpers 3 begrenzt wird. Der Schaft 21 steht nach oben über den übrigen Basiskörper 3 bzw. die Trennebene vor und ragt in bzw. durch den Deckelkörper 4 soweit vor, daß er über dessen Oberseite bzw. die des Gehäuses 2 vorsteht. In dem Schaft 21 ist eine Spindel 22 verschiebbar und drehbar gelagert, deren unteres Ende das mit ihr einteilige Stellglied 18 bildet und am Außenumfang axial und drehend gleitbar von dem Stellglied 19 im wesentlichen ohne Radialspiel umgeben ist. Die Steuerkammer 20 bzw. die darin liegenden Stellglieder 18, 19 sind etwa in der Ebene der Fluidausgänge 8 und geringfügig unterhalb des Sperrbereiches 11 vorgesehen.

Die beiden Stellglieder 18, 19 greifen über einen Steigungstrieb 23 so formschlüssig ineinander, daß sie ohne gegenseitige Steigungsbewegung allenfalls nur ein vernachlässigbar kleines gegenseitiges Dreh- und/oder Axialspiel haben. Das Stellglied 18 ist am Außenumfang mit mehreren gleichmäßig über den Umfang verteilten steilen und nicht selbsthemmend wirkenden Steigungswendeln 24 in Form von Wendelnuten versehen, in welche das Stellglied 19 mit über seinen Innenumfang vorstehenden, nockenförmigen Läufern 25 eingreift. Zur unteren bzw. Ausgangsstellung sind die Stellglieder 18, 19 mit einer Rückstellfeder 26 belastet, welche mit geringem Abstand benachbart zum Stellglied 18 zwischen dem Außenumfang der Spindel 22 und dem Innenumfang des Schaftes 21 außerhalb der Steuerkammer 20 angeordnet ist. Zur Abstützung der die Spindel 22 am Außenumfang umgebenden Rückstellfeder 26 weist die Spindel 22 im Übergangsbereich zum Stellglied 18 einen über deren Außenumfang ringförmig vorstehenden Bund 27 auf, der mit seinem Außenumfang so am Innenumfang des Schaftes 21 gleitbar gelagert ist, daß sich eine die Steuerkammer 20 am zugehörigen Ende schließende Spaltdichtung 28 ergibt.

Die Spindel 22 ist mit ihrem vom Stellglied 18 abgekehrten Ende durch eine so eng angepaßte Öffnung aus dem Schaft 21 herausgeführt, daß sich eine weitere Spaltdichtung 29 ergibt. Diese Öffnung ist durch eine ringscheibenförmige Stirnwand am oberen Ende des Schaftes 21 gebildet, welche zur Abstützung des oberen Endes der Rückstellfeder 26 sowie als Endanschlag für die nach oben gerichtete Axialbewegung des Stellgliedes 18 und damit zur Hubbegrenzung dient. Der Schaft 21 ist an beiden Enden zur Bildung von Montageöffnungen offen, im montierten Zustand jedoch am oberen Ende durch die Spaltdichtung 29 und am unteren Ende durch den in ihn eingreifenden Deckel 5 wasser- bzw. druckdicht verschlossen.

Die die Rückstellfeder 26 aufnehmende Kammer ist ebenfalls im wesentlichen dicht und insbesondere so geschlossen, daß sie, falls sie doch mit eindringendem Wasser gefüllt wird, keinem weiteren wesentlichen Wasseraustausch ausgesetzt ist. Die Spindel 22 ist durchgehend bis zum unteren Ende als dünnwandige Hohlspindel ausgebildet, so daß durch ihre Hubbewegung das Volumen der genannten Kammern möglichst wenig verändert wird.

In der Steuerkammer 20 ist auch eine Freilauf-Kupplung 30 vorgesehen, welche Drehbewegungen des Stellgliedes 19 und damit ohne gegenseitige Axialbewegung auch des Stellgliedes 18 nur in einer Drehrichtung freigibt sowie gegen die entgegengesetzte Drehrichtung sperrt. Ein Kupplungsglied 31 der Kupplung 30 kann lagestarr bzw. einteilig mit dem Stellglied 19 ausgebildet sein, während das andere, gehäusefeste Kupplungsglied 32 einteilig mit dem Deckel 5 bzw. dem Verschluß für die untere Montageöffnung des Schachtes 21 ausgebildet ist. Die beiden Kupplungsglieder 31, 32 können stirnseitig liegende ineinandergreifende sägezahnförmige und ringförmig angeordnete Rast- bzw. Kupplungs-Zahnungen aufweisen, die durch gegenseitige Axialbewegung voneinander zu trennen bzw. miteinander in Eingriff zu bringen sind, um die Kupplung 30 aus- bzw. einzurücken. Zur eingerückten Stellung ist die Kupplung 30 mit einer in der Steuerkammer 20 angeordneten Kupplungsfeder 33 belastet, die das Stellglied 19 am Außenumfang umgibt und an einer Stirnfläche des Kupplungsgliedes 31 abgestützt ist.

Der Fluideingang 7 mündet in eine nur zum Sperrbereich 11 bzw. der jeweiligen Sperröffnung 12 offene Eingangs-Druckkammer 34, die den Schaft 21 ringförmig umgibt und keine quer zur Achse 10 liegende Querunterteilung aufweist. Die Mündung 35 liegt am Innenumfang und mit einem gegenüber ihrer Weite kleineren Abstand oberhalb des Sperrbereiches 11. Mit Radialabstand innerhalb der Druckkammer 34 ist etwa in der Achse 10 ein Antriebskolben 36 des Antriebes 16 vorgesehen. In Ausgangslage übergreift der napfförmige Hohlkolben 36 annähernd mit seiner gesamten Länge den Schaft 21 etwa bis zur Sperrscheibe 14, wobei er den Schaft 21 mit Radialabstand umgibt. Der etwa zylinderische Kolbenmantel 37 liegt mit seinem freien Ende den Sperröffnungen 12 so gegenüber, daß das Wasser aus der Druckkammer 34 zum Teil entlang des Außenumfanges des Kolbenmantels 37 unmittelbar in die geöffnete Sperröffnung 12 und spätestens nach Aufbau eines entsprechenden Rückstaues im Fluidausgang 8 in das Innere des Kolbens 36 fließen kann, aus welchem es nach Druckabbau entlang des Innenumfanges unmittelbar durch die geöffnete Sperröffnung abfließen kann.

Am oberen Ende ist der Kolbenmantel 37 mit einer im wesentlichen einteilig mit ihm ausgebildeten Kolbenstirnwand 38 verschlossen, die stets oberhalb der Oberseite des Gehäuses 2 liegt und deren innere Stirnfläche die für die Druckbeaufschlagung wirksame, ringförmige Kolbenstirnfläche 39 bildet. Mit dieser Stirnfläche kann der Kolben 36 in der Ausgangsstellung an der oberen Stirnfläche des Schaftes 21 anschlagen, jedoch kann auch eine das untere Ende der Spindel 22 in der Ausgangsstellung führende Sacklochöffnung im Deckel 5 einen solchen Endanschlag für das untere Ende des Stellgliedes 18 bilden, bis zu welchem die Steigungswendel 24 durchgeht. Über die innere Stirnfläche 39 steht ein zentraler Kolbenschaft 41 vor, der mit der Spindel 22 drehfest und axial gesichert, jedoch zerstörungsfrei leicht lösbar verbunden ist sowie die innere Begrenzung der Spaltdichtung 29 bildet.

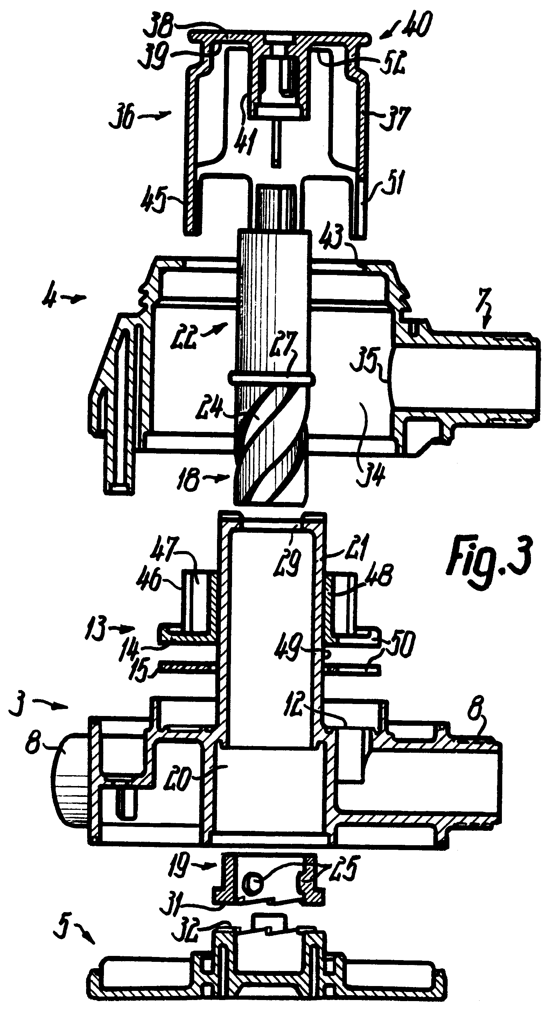

Am oberen Ende weist die Spindel 22 einen geringfügig über den Außenumfang des Schaftes 41 vorstehenden Bund als Anschlag auf, der in der oberen Endstellung an der inneren Stirnfläche der oberen Stirnwand des Schaftes 21 anliegt. Durch die erfindungsgemäße Ausbildung genügt ein sehr geringer Gesamthub von weniger als 30 bzw. 20 mm, nämlich in der Größenordnung von etwa 10 bis 15 mm. Entgegen der Darstellung gemäß Fig. 3 wird die Spindel 22 von der unteren Montageöffnung des Basiskörpers 3 her gemeinsam mit dem Stellglied 19 und den Federn 26, 33 eingesetzt, während der Kolbenschaft 41 von der oberen Montageöffnung her eingesetzt und dann durch eine Steckverbindung und Verschraubung mit der Spindel 22 verbunden wird.

Der zylindrische Außenumfang des Kolbenmantels 37 gleitet in einer eng angepaßten Öffnung in der oberen Stirnwand des Deckelkörpers 4, wodurch ebenfalls eine Spaldichtung, insbesondere gegen Eindringen von Schmutz, gebildet ist. Unmittelbar an der Innenseite dieser Stirnwand liegt ein am Außenumfang des Kolbens 36 gleitender Wellendichtring 42, dessen Dichtlippe mit einer Ringfeder gegen den Außenumfang gespannt und so angeordnet ist, daß die Dichtpressung mit zunehmendem Druck im Druckraum 34 ansteigt.

Der Kolben 36 ist mit dem Sperrorgang 13 über einen klauenkupplungsartige Schiebekupplung 44 drehschlüssig, jedoch über den Gesamthub verschiebbar verbunden, wobei die beiden Kupplungsglieder 45, 46 einteilig mit dem Kolben 36 und der Sperrscheibe 14 ausgebildet sind. Das Sperrorgan 13 ist mit einem nur über die obere Stirnfläche der Sperrscheibe 14 vorstehenden Lagerelement 48 auf dem Außenumfang des Schaftes 21 im wesentlichen radialspielfrei drehbar gelagert und kann auch mit dem Außenumfang der Sperrscheibe 14 drehbar an einem Ringmantel des Basiskörpers 3 geführt sein. Die steg- bzw. plattenförmigen Kupplungsglieder 45 des Kolbens 36 sind unmittelbar durch dessen Mantel, nämlich dadurch gebildet, daß sie durch Ausschnitte im Kolbenmantel 37 hergestellt sind.

Die Kupplungsglieder 46 des Sperrorganges 13 stehen als verhältnismäßig breite Nocken über den Außenumfang des Lagerelementes 48 vor und greifen in Drehrichtung im wesentlichen spielfrei zwischen die Kupplungsglieder 45 ein. In der Ausgangsstellung liegt das frei verschiebbare Sperrorgan 13 wenigstens unter seiner Gewichtskraft sperrend an den Ventilsitzen der Sperröffnungen 12 an, wobei es bis zum Anschlag am Kolben 36 eine kleine axiale Spiel- bzw. Abhebbewegung ausführen kann. Insofern bildet nur ein kleiner, mittlerer Längsabschnitt des Schaftes 21 das Gegenlager 49 für das Sperrorgan 13.

Damit der Kolben 16 nur in einer einzigen Drehlage mit dem Sperrorgang 13 verbunden werden kann, ist eine Lagesicherung 51 vorgesehen, die durch einen radial vom Lagerelement 48 nach außen abstehenden Steg und einen diesen aufnehmenden Schlitz im Kolbenmantel 37 gebildet ist, wobei dieses Gegenglied eines der Kupplungsglieder 45 durchsetzt. Die Kupplungsglieder 46 des Sperrorganges 13 erstecken sich um die Achse 10 über einen Bogenwinkel von mehr als 20 oder 30° und bilden hohle bzw. an ihrem Außenumfang offene Nocken, so daß sie Leitungsverbindungen 47 zwischen der Außen- und der Innenseite des Kolbenmantels 37 bilden, durch die das Wasser aus dem Druckraum 34 in das Kolbeninnere strömen kann.

Das in Ausgangsstellung nur nach Art einer flachen Scheibe über die Oberseite des Gehäuses 2 vorstehende Ende des Teiles 36 bildet eine Handhabe 40, mit welcher das Sperrorgang 13 gedreht werden kann. In der Ausgangsstellung sind das Sperrorgang 13, die Stellglieder 18, 19 und der Kolben 36 mit Handhabe 40 dadurch gegen Verdrehen gegenüber dem Gehäuse 2 gesichert, daß ein über die Stirnfläche 39 vorstehender Rastnocken 52 des Kolbens 36 in eine Rastöffnung 53 eingreift. Diese Rastung kann durch eine geringe Axial- bzw. Hubbewegung des Kolbens 36 ausgerückt werden, wobei nur für jede Betriebs-Steuerstellung eine Rastung vorgesehen ist und dazwischen liegende Stellungen nicht einrasten. Soll das Sperrorgan 13 von Hand gedreht werden, so wird nach Abnehmen der Verschlußkappe 6 die Handhabe 40 bis zum Ausrücken der Rastung 52, 53 angehoben und dann bis zur gewünschen Rastung gedreht.

Für die jeweilige Steuerstellung des Sperrorganes 13 ist eine Anzeigeeinrichtung 54 vorgesehen, die z.B. an der oberen Stirnfläche und/oder am Umfang der Handhabe 40 des Kolbens 36 einen Zeiger 55 und benachbart dazu an der Oberseite des Deckelkörpers 4 für jeden Fluidausgang 8 ein Anzeigesymbol 56 aufweist. Der über die genannte Oberseite vorstehende Teil des Kolbens 36 bildet den Zeiger einer Anzeige 57 für den Druckzustand im Druckraum 34. Je länger der über diese Oberseite vorstehende Teil des Kolbens 36 ist, um so höher ist der Druck. Bei Hubendstellung liegt das obere Ende des Kolbens 36 mit geringem Abstand unterhalb der Stirnwand der Verschlußkappe 6. Durch einen in der Ausgangsstellung an der oberen Stirnfläche des Kolbens 36 angreifenden Anschlag könnte die Hubbewegung und damit das Schaltwerk 17 gesperrt werden.

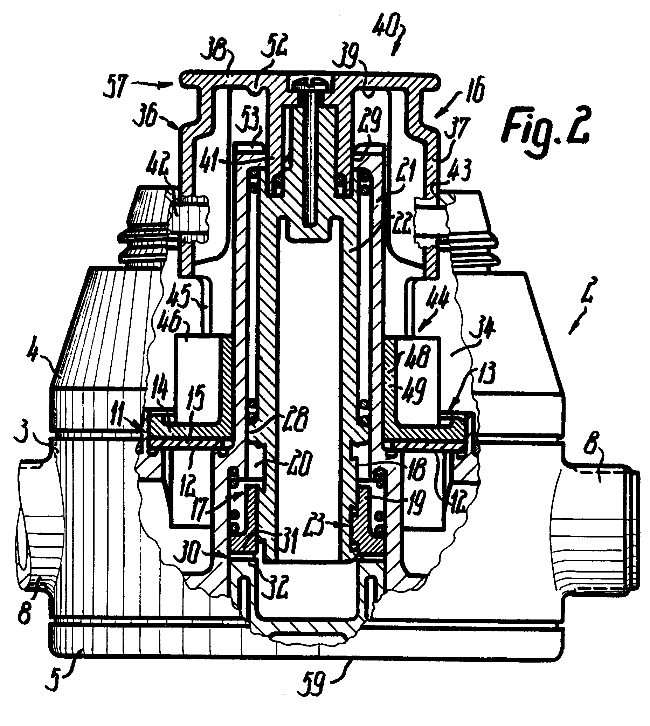

Wird über den Fluideingang 7 unter Druck Wasser dem Druckraum 34 zugeführt, so fließt es sofort über den Durchfluß 50 durch den voll geöffneten Durchflußquerschnitt der Sperröffnung 12 in den zugehörigen Fluidausgang 8 und füllt die zugehörige Schlauchleitung bis zu dem an dieser angeschlossenen Verbraucher. Gleichzeitig baut sich in dieser Leitung ein Rückstau auf, der den Druck im Druckraum 34 ansteigen läßt und gegen die Kolbenstirnfläche 39 wirkt. Übersteigt die Druckkraft die Kraft der Rückstellfeder 26, so beginnt der Kolben 36 seinen Hub, bei welchem das Stellglied 19 durch das Stellglied 18 in derjenigen Drehrichtung belastet wird, in welcher es gemäß Fig. 2 durch die Kupplung 30 freigegeben wird. Das Schaltwerk 17 ist daher über den gesamten Hub inaktiviert, weil nämlich das Stellglied 19 gegenüber dem Stellglied 18 verdreht wird und dieses daher selbst nicht dreht, sondern nur die Hubbewegung ausführt. Da der Fluiddurchlaß 50 in der drucklosen Ruhe- bzw. Ausgangsstellung des Fluidverteilers 1 dieselbe Stellung einnimmt wie in der darauffolgenden Hubend- bzw. Betriebsstellung, werden sehr gute Strömungsverhältnisse zum jeweils geöffneten Verbraucher erreicht.

Da der Durchlaß 50 als zum Außenumfang der Sperrscheibe 14 und der Dichtung 15 offener Ausschnitt ausgebildet ist, kann das Wasser sehr schnell in den geöffneten Fluidausgang 8 fließen. Gleichzeitig mit dem Anheben des Kolbens 36 werden die Ausschnitte zwischen den Sperrgliedern 45 durch die Sperrglieder 46 zunehmend freigegeben, so daß der Durchflußquerschnitt des Übertrittes vom Druckraum 34 zum Innern des Kolbens 36 wegabhängig vergrößert und der Druck im Kolben 36 zunehmend schneller erhöht wird.

Der Kolben 36 verbleibt bis zur Beendigung der Wasserzufuhr in der Hubendstellung, die dadurch von außen erkannt werden kann, daß die Verschlußkappe 6 teilweise oder vollständig aus durchsichtigem Werkstoff besteht und daher ein Anzeigefenster 58 bildet. Wird die Wasserzufuhr abgestellt, so fällt der Druck im Druckraum 34, und der Kolben 36 kehrt unter der Kraft der Rückstellfeder 26 in seine Ausgangsstellung zurück. Dabei wirkt der Steigungstrieb 23 auf das Stellglied 19 in derjenigen Drehrichtung, gegen welche dieses Stellglied 19 durch die Kupplung 30 gesperrt ist, so daß nunmehr über den gesamten Rückhub das Stellglied 18 gemeinsam mit dem Kolben 36 und dem Sperrorgang 13 dreht. Der Schaltweg während dieses Rückhubes ist so gewählt, daß der Durchlaß 50 von der zuvor maximal freigegebenen Sperröffnung 12 zur nächstfolgenden Sperröffnung gelangt und diese dann ebenfalls mit maximalem Durchflußquerschnitt freigibt.

Danach kann durch Freigeben der Wasserzufuhr und Druckaufbau in der Druckkammer 34 wieder der nächste Schaltvorgang dadurch vorbereitet werden, daß durch Anheben des Kolbens 36 die Feder 26 ohne Betätigung des Sperrorganges 13 gespannt und schließlich nur beim Rückhub der Durchlaß 50 auf die nächste Sperröffnung 12 weitergeschaltet wird. Durch den Druckaufbau wird das kolbenartige Sperrorgang 13 mit der Dichtung 15 dicht schließend gegen die Ventilsitze der geschlossenen Sperröffnungen 12 gepreßt. Da die Dichtung 15 als durchgehend annähernd ebene Ringscheibe ausgebildet ist, die im wesentlichen ganzflächig an der zugehörigen Stirnfläche der Sperrscheibe 14 abgestützt ist, ergibt sich bei sehr einfachem Aufbau eine hohe Dichtwirkung.

Die zur Handbetätigung durch Anheben der Handhabe 40 auszurückenden Rastnocken 52 können gemäß Fig. 3 auch durch mehrere sternförmig um die Achse 10 verteilte Rippen gebildet sein, welche an axiale Versteifungsrippen anschließen, so daß jeweils mehrere bzw. eine der Anzahl der Fluidaustritte 8 entsprechende Anzahl von Rastnocken 52 in Rastöffnungen 53 eingreifen. In Ausgangsstellung kann das Schaltwerk auch lediglich durch Anheben und Freigeben bzw. in Betriebsstellung durch Niederdrücken und Freigeben der Handhabe 40 jeweils um einen Schritt weitergeschaltet werden.

Der gegenüber seiner Außenweite wesentlich flachere, schalenförmige Deckel 5 bildet mit seiner Unterseite die zur Achse 10 rechtwinklige Standfläche 59 des Fluidverteilers 1, deren Außenweite etwa gleich groß wie die Außenweite des Basiskörpers 3 bzw. des Gehäuses 2 ist. Mit dem Basiskörper 3 begrenzt der Deckel 5 eine die Steuerkammer 20 umgebende Ringkammer 60, die gegenüber den Fluidführungen 9 und nach außen abgedichtet ist. Eine solche, den Druckraum 34, den Sperrbereich 11 und einen oberen Teil der Ringkammer 60 umgebende Ringkammer 61 bildet auch der Basiskörper 3 gemeinsam mit dem Deckelkörper 4, wobei beide Ringkammern 60, 61 an die äußersten Umfangswandungen der Gehäusekörper 3 bis 5 reichen und von den Fluidausgängen 8 sowie dem Fluidausgang 7 rohrförmig durchsetzt sind.

Durch die Ringkammern ergibt sich ein sehr guter Schutz der innen liegenden Bauteile gegen Beschädigung durch Schlagbelastung oder dgl., wobei die Dichtungen zur Abdichtung der Gehäuseteile 3 bis 5 zweckmäßig ebenfalls radial innerhalb der inneren Begrenzung dieser Trockenkammern 60, 61 liegen. Befestigungsglieder, wie Schrauben, zur axialen Verspannung der Gehäuseteile 3, 4 gegeneinander können innerhalb der Ringkammer 61 geschützt liegen und nur nach Abnehmen des Deckels 5 zugänglich sein, der zerstörungsfrei leicht lösbar mit innerhalb der Ringkammer 60 liegenden Schrauben oder dgl. befestigt ist.

Die Steuerkammer 20 ist gegenüber dem die Feder 26 aufnehmenden Bereich der Gehäusewandung 21 erweitert, geht bis zur zugehörigen Montageöffnung mit etwa konstanter Weite durch und bildet im gegenüberliegenden Übergangsbereich eine Ringschulter zur Abstützung der Feder 33, wobei die Wandung der Steuerkammer 20 mit ihrer Außenseite die Bodenfläche der Fluidausgänge 8 bildet. Nach Abnehmen des Deckels 5 ist das untere Ende der Spindel 22 bzw. das Sperrglied 18 frei zugänglich, und das Stellglied 19 kann gemeinsam mit der Feder 33 nach unten abgezogen werden. Nach Lösen der Schraubverbindung oder dgl. zwischen dem Kolben 36 und der Spindel 22 kann diese ebenfalls nach unten herausgezogen werden, ohne daß die Gehäuseteile 3, 4 voneinander gelöst werden müßten. Auch der Kolben 36 sowie ggf. das Sperrorgang 13 können dann nach oben abgezogen bzw. bewegt werden, so daß der Druckraum 34 einschließlich der Ventilsitze durch die Öffnung 49 zur Reinigung sehr gut zugänglich ist.

Die Wasserzufuhr für die z.B. in einer geraden Anzahl von sechs vorgesehenen Fluidausgänge 8 bzw. den Fluidverteiler 1 kann über ein Zeitschaltglied zeitabhängig an- und abgestellt werden, so daß eine sehr vorteilhafte Bewässerungsweise möglich ist.

## Patentansprüche

1. Fluidverteiler zur wahlweisen Fluidverteilung von einem Fluideingang (7) über Fluidführungen (9) auf mehrere Fluidausgänge (8), insbesondere zur Wasserverteilung in Bewässerungs-Einrichtungen, mit einem Grundkörper (2) und einem einen Antrieb (16) aufweisenden, eine Schaltbewegung ausführenden Schaltwerk (17) zur aufeinanderfolgenden Leitungsverbindung mindestens eines der Fluidausgänge (8) mit dem Fluideingang (7) sowie zur Sperrung mindestens eines weiteren der Fluidausgänge (8) an einem öffenbaren Sperrbereich (11) in jeweils einer bestimmungsgemäßen Betriebs-Steuerstellung, die im geöffneten Sperrbereich (11) einen Betriebs-Durchflußquerschnitt bestimmt, wobei der Antrieb (16) eine Ruhe- bzw. Ausgangsstellung sowie eine Arbeitsbewegung bestimmt, insbesondere derart, daß das Schaltwerk (17) zur Weiterschaltung von einer Steuerstellung zu einer weiteren Steuerstellung jeweils eine der Schaltbewegungen ausführt, die über die von der Ruhe- bzw. Ausgangsstellung ausgehende und bis zur Ausgangsstellung zurückkehrende Arbeitsbewegung des Antriebes (16) angetrieben ist, dadurch gekennzeichnet, daß mindestens eines der folgenden Merkmale vorgesehen ist:
a) die Schaltbewegung erfolgt nur auf einem Teil der Arbeitsbewegung,
b) die Ausgangsstellung fällt mit einer Betriebs-Steuerstellung zusammen,
c) der Antrieb (16) erhält Antriebsenergie von einem Rückstaudruck in einem Fluidausgang (8),
d) bei Fluidzufuhr zum Fluideingang (7) erfolgt eine Arbeitsbewegung bei im wesentlichen inaktiviertem Schaltwerk (17) und
e) das Schaltwerk (17) ist gegenüber Fluidströmungen im wesentlichen abgeschlossen.

2. Fluidverteiler nach Anspruch 1, dadurch gekennzeichnet, daß die Antriebsbewegung des Antriebs (16) eine von der Ausgangsstellung in einer Richtung ausgehende und zu dieser in einer entgegengesetzten Richtung zurückkehrende, reversierende Bewegung in zwei Bewegungsphasen, insbesondere eine im wesentlichen lineare Hubbewegung ist und daß vorzugsweise die Schaltbewegung nur in einer Bewegungsphase erfolgt.

3. Fluidverteiler nach Anspruch 1 oder 2, dadurch gekennzeichnet, daß zur Inaktivierung des Schaltwerkes (17) eine über Kupplungsbewegungen ein- und ausrückbare Kupplung (30), insbesondere eine nur in einer Bewegungsrichtung wirksame Freilauf-Kupplung (30) vorgesehen ist und daß vorzugsweise das Schaltwerk (17) zwei gegeneinander über die Schaltbewegung verstellbare Stellglieder (18, 19), nämlich ein unmittelbar vom Antrieb (16, 40) angetriebenes Antriebs-Stellglied (18) sowie ein mit diesem zur Durchführung der Schaltbewegung in Eingriff stehendes und in einer Arbeitslage die Schaltbewegung bewirkendes Gegen-Stellglied (19) aufweist, wobei eines der Stellglieder (19) einem Kupplungsglied (31) der Kupplung (30) zugeordnet ist.

4. Fluidverteiler nach einem der vorhergehenden Ansprüche, dadurch gekennzeichnet, daß die Stellglieder (18, 19) des Schaltwerkes (17) über einen Steigungstrieb (23) ineinandergreifen, daß insbesondere die Kupplung (30) gesondert vom Steigungstrieb (23) zwischen einem Stellglied (19) und einem von beiden Stellgliedern (18, 19) gesonderten Gegenglied vorgesehen ist und daß vorzugsweise das Gegen-Kupplungsglied (32) der Kupplung (30) an dem die Fluidausgänge (8) bzw. den Fluideingang (7) tragenden Grundkörper (2) vorgesehen ist, und/oder daß die Kupplung (30) vom Antrieb (16) gesteuert und im wesentlichen über eine gesamte erste Bewegungsphase der Antriebsbewegung ausgerückt sowie im wesentlichen über eine gesamte zweite Bewegungsphase eingerückt ist, daß insbesondere die Schaltbewegung in der von der Ausgangsstellung ausgehenden Bewegungsphase der Antriebsbewegung stillgesetzt ist und daß vorzugsweise die Kupplungsbewegung von einem Stellglied (18) auf das andere Stellglied (19) übertragen wird bzw. eine von der Schaltbewegung abweichend gerichtete Bewegung ist.

5. Fluidverteiler nach einem der vorhergehenden Ansprüche, dadurch gekennzeichnet, daß eine Kupplung (30) eines Schaltwerkes (17) eine axiale Kupplungsbewegung aufweist, daß insbesondere die Kupplung (30) nur an Stirnseiten ineinandergreifende bzw. im ausgerückten Zustand einander rastend überspringende Kupplungsglieder (31, 32) aufweist und daß vorzugsweise das Kupplungsglied (31) am Gegen-Stellglied (19) vorgesehen ist bzw. zur Durchführung der Kupplungsbewegung vom Antriebs-Stellglied (18) mitgenommen wird, und/oder daß das dem Kupplungsglied (31) zugeordnete Stellglied (19) in Richtung der Schaltbewegung bzw. in Richtung der Kupplungsbewegung gegenüber dem Grundkörper (2) bewegbar und insbesondere im wesentlichen lagestarr bis einteilig mit dem Kupplungsglied (31) verbunden ist, daß insbesondere das dem Kupplungsglied (31) zugeordnete Stellglied (19) an dem anderen Stellglied (18) bzw. dem Grundkörper (2) gleitend gelagert ist und daß vorzugsweise das Gegen-Stellglied (19) zu seiner Arbeitslage federbelastet ist.

6. Fluidverteiler nach einem der vorhergehenden Ansprüche, dadurch gekennzeichnet, daß die Stellglieder (18, 19) des Schaltwerkes (17) in Richtung der Schaltbewegung in annähernd jeder gegenseitigen Stellung formschlüssig bzw. im wesentlichen spielfrei ineinandergreifen, daß insbesondere der Steigungstrieb (23) mindestens eine Steigungswendel (24) und einen in diese eingreifenden Läufer (25) aufweist und daß vorzugsweise das Gegen-Stellglied (19) mit Abstand zwischen den Enden des Stellgliedes (18) bzw. im Bereich einer gemeinsamen Mittelebene mindestens zweier Fluidausgänge (8) liegt, und/oder daß mindestens ein Stellglied (18, 19) des Schaltwerkes (17) in einer gegen Fluidaustausch mit den Fluidführungen (9) im wesentlichen geschlossenen Steuerkammer (20) angeordnet ist, daß insbesondere die Steuerkammer (20) mit mindestens einer von Gleitflächen gebildeten Spaltdichtung (28, 29) gegenüber der Fluidführung (9) geschlossen ist und daß vorzugsweise die Steuerkammer (20) im Abstand voneinander liegende Montageöffnungen aufweist, von denen eine mit einer Antriebsverbindung für ein Stellglied (18) und eine weitere mit einem Deckel (5) des Grundkörpers (2), einem Endanschlag für mindestens ein Stellglied (18, 19) bzw. dem Gegen-Kupplungsglied (32) verschlossen ist.

7. Fluidverteiler nach einem der vorhergehenden Ansprüche, dadurch gekennzeichnet, daß Rückstellmittel (26, 33) in einer gegenüber den Fluidführungen im wesentlichen geschlossenen Kammer (20) angeordnet sind, daß insbesondere eine Rückstellfeder (26) für das Schaltwerk (17) und eine Rückstellfeder (33) für die Kupplung (30) in gesonderten Kammern bzw. achsgleich angeordnet sind und daß vorzugsweise die, mindestens eine Rückstellfeder (33) aufnehmende, Steuerkammer (20) die an die Fluidführungen (9) angrenzende Spaltdichtung (28, 29) nur an der Oberseite aufweist, und/oder daß ein Antrieb (16) einen Fluidantrieb aufweist, daß insbesondere ein Antriebskolben (36) des Fluidantriebes eine gegenüber dem Schaltwerk (17) größere Außenweite aufweist sowie in Ansicht parallel zur Kolbenachse (10) das Schaltwerk (17) bzw. wenigstens einen Teil des Sperrbereiches (11) am Außenumfang umgibt und daß vorzugsweise der Antriebskolben (36) als kappenförmiger Hohlkolben ausgebildet ist, dessen innerer Stirnfläche (39) das Schaltwerk (17) bzw. der Sperrbereich (11) gegenüberliegt, wobei ein das Stellglied (18) tragender Kolbenschaft (41) im Abstand innerhalb des Außenumfanges des Antriebskolbens (36) im wesentlichen nur über dessen innere Stirnfläche (39) vorsteht.

8. Fluidverteiler nach einem der vorhergehenden Ansprüche, dadurch gekennzeichnet, daß ein Sperrbereich (11) für das Fluid zwischen einer Eingangs-Druckkammer (34) und Fluidausgängen (8) Sperröffnungen (12) sowie ein gegenüber diesen in unterschiedliche Schaltstellungen bewegbares Sperrorgan (13) mit einem Fluiddurchlaß (50) aufweist, der in der jeweiligen Steuerstellung zur Bildung eines Betriebs-Durchflußquerschnittes eine Sperröffnung (17) im wesentlichen vollständig freigibt, daß insbesondere das Sperrorgan (13) in der Ausgangsstellung Sperröffnungen (12) unter Gewichts- bzw. Federkraft schließt und daß vorzugsweise das Sperrorgan (13) in das Innere des Antriebskolbens (36) eingreift, und/oder daß ein Sperrorgan (13) des Sperrbereiches (11) und ein Antriebskolben (36) des Antriebes (16) über mindestens ein an den Innenumfang des Antriebskolbens (36) anschließendes Kupplungsglied (45, 46) einer Schiebekupplung (44) in Richtung der Schaltbewegung formschlüssig sowie gegeneinander axial verschiebbar verbunden sind, daß insbesondere das Sperrorgan (13) mit einem lagestarr mit einer Sperrscheibe (14) verbundenen Lagerelement (48) in den Antriebskolben (36) eingreift, das im wesentlichen innerhalb des Außenumfanges des Antriebskolbens (36) liegt und daß vorzugsweise das Sperrorgan (13) im wesentlichen unmittelbar an einem gegenüber dem Grundkörper (2) lagefesten Gegenlager (49) bzw. auf dem Außenumfang eines die Steuerkammer (20) begrenzenden Mantels (22) bewegbar gelagert ist.

9. Fluidverteiler nach einem der vorhergehenden Ansprüche, dadurch gekennzeichnet, daß die wirksame Kolbenstirnfläche (39) eines Antriebskolbens (36) eines Antriebes (16) im wesentlichen unmittelbar wenigstens einem Teil eines Fluiddurchlasses (50) eines Sperrorganes (13) eines Sperrbereiches (11) für das Fluid gegenüberliegt, daß insbesondere der Kolbenmantel (37) des Antriebskolbens (36) den Fluiddurchlaß (50) überdeckt und daß vorzugsweise eine Schiebekupplung (44) zwischen dem Antriebskolben (36) und dem Sperrorgan (13) eine Leitungsverbindung zwischen einer Eingangs-Druckkammer (34) und der wirksamen Kolbenstirnfläche (39) bildet bzw. eine größte Weite hat, die etwa in der Größenordnung eines Teilkreises liegt, auf welchem Sperröffnungen (12) von Fluidausgängen (8) mit ihren Mittelachsen verteilt sind, und/oder daß die Fluidverteilung durch unmittelbaren manuellen Eingriff mit einer am Grundkörper (2) gelagerten Handhabe (40) betätigbar ist, daß insbesondere die Handhabe (40) lagefest mit einem Antriebskolben (36) des Antriebes (16) bzw. einem Stellglied (18) des Schaltwerkes (17) verbunden ist und daß vorzugsweise die Handhabe (40) einteilig mit dem Antriebskolben (36) ausgebildet ist.

10. Fluidverteiler nach einem der vorhergehenden Ansprüche, dadurch gekennzeichnet, daß mindestens eine von der Außenseite des Fluidverteilers (1) ablesbare Anzeige (54, 57) für wenigstens einen Betriebszustand des Fluidverteilers (1) vorgesehen ist, daß insbesondere eine Anzeige (57) für den Fluiddruck vorgesehen und von einem Kolben (36) betätigt ist und daß vorzugsweise ein Antriebskolben (36) eines Antriebes (16) mindestens ein abgedichtet aus dem Grundkörper (2) an die Außenseite des Fluidverteilers (1) reichendes, linear bewegbares Anzeigeglied bildet bzw. das Anzeigeglied oder die Handhabe (40) mit einem ein Anzeigefenster (48) bildenden sowie zerstörungsfrei leicht abnehmbaren Deckel (6) des Grundkörpers (2) abgedeckt ist, und/oder daß Fluidausgänge (8) sternförmig um eine Mittelachse (10) angeordnet sind, daß insbesondere Fluidausgänge (8) zur mit Anschlußleitungen gemeinsamen Bildung von einzelnen Standfüßen etwa parallel zu einer Boden-Standfläche (59) des Fluidverteilers (1) und unmittelbar benachbart zu dieser angeordnet sind und daß vorzugsweise der Fluideingang (7) etwa parallel zu Fluidausgängen (8) sowie gegenüber diesen höher liegt.

## Claims

1. Fluid distributor for the selective fluid distribution from a fluid inlet (7), via fluid guides (9) to several fluid outlets (8), particularly for water distribution in watering or irrigating systems, with a basic body (2) and a switching mechanism (17) having a drive (16) for the successive line connection of at least one of the fluid outlets (8) to the fluid inlet (7), as well as for blocking at least one other of the fluid outlets (8) at an openable blocking area (11) in in each case a given operating-control position and which in the opened blocking area (11) determines an operating passage cross-section, with the drive (16) defining an inoperative or starting position as well as an operating movement, particularly in such a way that the switching mechanism (17) for switching from one control position to a further control position performs one of the switching movements, which is driven by an operating movement of the drive (16) starting from an inoperative or starting position and returning to the starting position, characterized by at least one of the following features:
a) the switching movement only takes place on part of the working movement,
b) the starting position coincides with an operating-control position
c) the drive (16) receives motive energy from a damming back pressure in a fluid outlet (8),
d) in the case of a fluid supply to the fluid inlet (7) a working movement takes place when the switching mechanism (17) is essentially inactive, and
e) the switching mechanism (17) is substantially sealed with respect to fluid flows.

2. Fluid distributor according to claim 1, characterized in that the driving movement of the drive (16) is a reversing movement in two movement phases from the starting position in one direction and returning to the latter in an opposite direction, particularly a substantially linear stroke movement, and that preferably the switching movement only takes place in one movement phase.

3. Fluid distributor according to claim 1 or 2, characterized in that for deactivating the switching mechanism (17) there is a clutch (30) engageable and disengageable by means of coupling movements, particularly a freewheel clutch (30) only acting in one movement direction and that preferably the switching mechanism (17) has two control members (18, 19) adjustable against one another over the switching movement, namely a drive control member (18) driven directly by the drive (16, 40) and an opposite control member (19) in engagement therewith for performing the switching movement and bringing about the switching movement in one working position, one of the control members (19) being associated with a clutch member (31) of the clutch (30).

4. Fluid distributor according to any of the preceding claims, characterized in that the control members (18, 19) of the switching mechanism (17) interengage by means of a pitch drive (23), that in particular the clutch (30) is provided separately from the pitch drive (23) between a control member (19) and an opposite member separate from both control members (18, 19) and that preferably the opposite clutch member (32) of the clutch (30) is provided on the basic body (2) carrying the fluid outlets (8) or the fluid inlet (7), and/or that the clutch (30) is controlled by the drive (16) and is disengaged substantially over an entire first drive movement phase and is engaged substantially over an entire second movement phase, that in particular the switching movement is stopped in the drive movement phase starting from the starting position and that preferably the clutch movement is transferred from one control member (18) to the other control member (19) or is a movement diverging from the switching movement.

5. Fluid distributor according to any of the preceding claims, characterized in that a clutch (30) of a switching mechanism (17) has an axial clutch movement, that in particular the clutch (30) only has facially interengaging clutch members (31, 32) and/or jumping over one another in locking manner in the disengaged state, and that preferably the clutch member (31) is provided on the opposite control member (19) and is driven along by the drive control member (18) for performing the clutch movement, and/or that the control member (19) associated with the clutch member (31) is movable in the direction of the switching movement or in the direction of the clutch movement with respect to the basic body (2) and in particular is connected in substantially fixed or integral manner with the clutch member (31), that in particular the control member (19) associated with the clutch member (31) is slidingly mounted on the other control member (18) or the basic body (2), and that preferably the opposite control member (19) is spring loaded to its working position.

6. Fluid distributor according to any of the preceding claims, characterized in that the control members (18, 19) of the switching mechanism (17) in the direction of the switching movement interengage in approximately any reciprocal position in positive or substantially clearance-free manner, that in particular the pitch drive (23) has at least one pitch helix (24) and a runner (25) engaging therein and that preferably the opposite control member (19) is spaced between the ends of the control member (18) or in the vicinity of a common median plane of at least two fluid outlets (8), and/or that at least one control member (18, 19) of the switching mechanism (17) is located in a control chamber (20) substantially closed against fluid exchange with the fluid guides (9), that in particular the control chamber (20) is closed with at least one gap seal (28, 29) formed by sliding faces with respect to the fluid guide (9) and that preferably the control chamber (20) has spaced assembly openings, whereof one is closed with a drive connection for a control member (18) and another with a cover (5) of the basic body (2), an end stop for at least one control member (18, 19) or the opposite clutch member (32).

7. Fluid distributor according to any of the preceding claims, characterized in that restoring means (26, 33) are located in a chamber (20) substantially closed with respect to the fluid guides, that in particular a restoring spring (26) for the switching mechanism (17) and a restoring spring (33) for the clutch (30) are positioned in separate chambers or equiaxially and that preferably the control chamber (20) receiving at least one restoring spring (33) has the gap seal (28, 29) bounding the fluid guides (9) on only the top surface, and/or that a drive (16) has a fluid drive, that in particular a drive piston (36) of the fluid drive has a greater external diameter than the switching mechanism (17) and in a view parallel to the piston axis (10) surrounds the switching mechanism (17) or at least part of the blocking area (11) on the outer circumference and that preferably the drive piston (36) is constructed as a cap-like hollow piston, whose inner face (39) faces the switching mechanism (17) or the blocking area (11), a piston shaft (41) in spaced manner within the outer circumference of the drive piston (36) only projects over its inner face (39).

8. Fluid distributor according to any of the preceding claims, characterized in that a blocking area (11) for the fluid between an intake pressure chamber (34) and the fluid outlets (8) has blocking openings (12) and a blocking member (13) movable with respect thereto in different switching positions and having a fluid passage (50) and which in the particular control position substantially completely frees a blocking opening (17) for forming the operating passage cross-section, that in particular the blocking member (13) in the starting position closes the blocking openings (12) under weight and/or spring force and that preferably the blocking member (13) engages in the interior of the drive piston (36), and/or that a blocking member (13) of the blocking area (11) and a drive piston (36) of the drive (16) is connected by means of at least one clutch member (45, 46) of a sliding clutch (44) connected to the inner circumference of the drive piston (36) in the direction of the switching movement in positive manner and in axially displaceable manner against one another, that in particular the blocking member (13) engages with a bearing member (48) connected in fixed manner to a blocking disk (14) engages in the drive piston (36), which is essentially located within the outer circumference of the drive piston (36) and that preferably the blocking member (13) is movably mounted directly on an abutment (49) fixed with respect to the basic body (2) or on the outer circumference of a skirt (22) bounding the control chamber (20).

9. Fluid distributor according to any of the preceding claims, characterized in that the effective piston face (39) of a drive piston (36) of the drive (16) substantially directly faces at least part of a fluid passage (50) of a blocking member (13) of the blocking area (11), that in particular the piston skirt (37) of the drive piston (36) covers the fluid passage (50) and that preferably a sliding coupling (44) between the drive piston (36) and the blocking member (13) forms a line connection between an intake pressure chamber (34) and the effective piston face (39) or has a greatest width or diameter, which is roughly a pitch circle on which are distributed with their central axes the blocking openings (12) of the fluid outlets (8), and/or the fluid distribution is operable by direct manual engagement with a handle (40) located on the basic body (2), that the handle (40) is connected in fixed manner to a drive piston (36) of the drive (16) or a control member (18) of the switching mechanism (17) and that preferably the handle (40) is constructed integrally with the drive piston (36).

10. Fluid distributor according to any of the preceding claims, characterized in that at least one indicator (54, 57) readable from the outside of the fluid distributor (1) is provided for at least one operating state of the fluid distributor (1), that in particular a display (57) is provided for the fluid pressure and is operated by a piston (36) and that preferably a drive piston (36) of the drive (16) forms at least one linearly movable indicating member extending in sealed manner from the basic body (2) and extending to the outside of the fluid distributor (1) and/or the indicating member or handle (40) is covered by a cover (6) of the basic body (2) forming a window (48) and easily removable in non-destructive manner, and/or that fluid outlets (8) are radially arranged about a central axis (10), that in particular fluid outlets (8) for forming bases together with connecting lines are positioned roughly parallel to a base (59) of the fluid distributor (1) and directly adjacent thereto and that preferably the fluid inlet (7) is roughly parallel to the fluid outlets (8) and is higher than the latter.

## Revendications

1. Distributeur de fluide pour la distribution de fluide au choix à partir d'une entrée de fluide (7) passant par des conduites de fluide (9) sur plusieurs sorties de fluide (8), notamment pour la distribution d'eau dans des dispositifs d'irrigation, avec un corps de base (2) et un mécanisme de commutation (17), qui présente un actionnement (16) et qui exécute un mouvement de commutation, pour le raccord de conduite consécutif d'au moins une des sorties de fluide (8) avec l'entrée de fluide (7) ainsi que pour le barrage d'au moins une autre des sorties de fluide (8) auprès d'un domaine de barrage (11) ouvrable, dans respectivement un positionnement de commande de service conforme au but, qui définit dans le domaine de barrage (11) ouvert une section transversale d'écoulement de service, l'actionnement (16) définissant un état de repos ou encore initial ainsi qu'un mouvement de travail, notamment de façon que le mécanisme de commutation (17) effectue, pour l'avancement à partir d'un état de commande à un autre état de commande, respectivement un des mouvements de commutation, qui est actionné par le mouvement de travail de l'actionnement (16), mouvement qui part de l'état de repos ou encore initial et qui revient jusqu'à l'état initial, caractérisé en ce que au moins une des suivantes caractéristiques soit prévue:
a) le mouvement de commutation est effectué seulement sur une partie du mouvement de travail,
b) l'état initial coïncide avec un état de commande de service,
c) l'actionnement (16) obtient de l'énergie motrice d'une pression de reflux dans une sortie de fluide (8),
d) en cas d'alimentation par fluide vers l'entrée de fluide (7) un mouvement de travail a lieu, le mécanisme de commutation (17) étant essentiellement inactivé et
e) le mécanisme de commutation (17) est essentiellement clos par rapport à des courants de fluide.

2. Distributeur de fluide selon la revendication 1, caractérisé en ce que le mouvement d'actionnement de l'actionnement (16) est un mouvement renversant, qui part de l'état initial dans une direction, et qui revient à celui-ci dans une direction opposée, en deux phases de mouvement, notamment un mouvement de course essentiellement linéaire et en ce que de préférence le mouvement de commutation est effectué seulement dans une phase de mouvement.

3. Distributeur de fluide selon la revendication 1 ou 2, caractérisé en ce que pour la mise dans un état inactif du mécanisme de commutation (17) est prévu un accouplement (30), à enclencher et à désenclencher par des mouvements d'accouplement, notamment un accouplement à roue libre (30) agissant dans une seule direction de mouvement et en ce que de préférence le mécanisme de commutation (17) présente deux vérins (18, 19), qui sont mobiles l'un par rapport à l'autre par le mouvement de commutation, c'est-à-dire un vérin d'actionnement (18), qui est actionné directement par l'actionnement (16, 40), ainsi qu'un contre-vérin (19), qui est en prise avec celui-ci pour l'exécution du mouvement de commutation et qui cause dans un état de travail le mouvement de commutation, un des vérins (19) étant associé à un élément d'accouplement (31) de l'accouplement (30).

4. Distributeur de fluide selon une des revendications précédentes, caractérisé en ce que les vérins (18, 19) du mécanisme de commutation (17) s'enchaînent par intermédiaire d'un entraîneur à pas (23), en ce que notamment l'accouplement (30) est prévu de manière distincte de l'entraîneur à pas (23) entre un vérin (19) et un contre-élément distinct des deux vérins (18, 19) et en ce que de préférence le contre-élément d'accouplement (32) de l'accouplement (30) est prévu au corps de base (2) portant les sorties de fluide (8) ou encore l'entrée de fluide (7), et/ou en ce que l'accouplement (30) est commandé par l'actionnement (16) et qu'il est désenclenché essentiellement au long de toute une première phase de mouvement du mouvement d'actionnement ainsi qu'il est enclenché essentiellement au long de toute une deuxième phase de mouvement, en ce que notamment le mouvement de commutation, dans la phase de mouvement, qui part de l'état initial, du mouvement d'actionnement, est mis hors de service et en ce que de préférence le mouvement d'accouplement est transmis d'un vérin (18) à l'autre vérin (19) ou encore qu'il est un mouvement directionné autrement que le mouvement de commutation.

5. Distributeur de fluide selon une des revendications précédentes, caractérisé en ce qu'un accouplement (30) d'un mécanisme de commutation (17) présente un mouvement d'accouplement axial, en ce que notamment l'accouplement (30) présente seulement sur des faces frontales des éléments d'accouplement (31, 32) qui s'enchaînent ou encore qui se surpassent à crantage dans l'état désenclenché et en ce que de préférence l'élément d'accouplement (31) est prévu sur le contre-vérin (19) ou encore est entraîné pour l'exécution du mouvement d'accouplement par le vérin d'actionnement (18), et/ou en ce que le vérin (19) attribué à l'élément d'accouplement (31) est joint à l'élément d'accouplement (31) de façon mobile et notamment en substance en positionnement rigide jusqu'à en une seule pièce, en direction du mouvement de commutation ou encore en direction du mouvement d'accouplement par rapport au corps de base (2), en ce que notamment le vérin (19) attribué à l'élément d'accouplement (31) est logé de manière glissante auprès de l'autre vérin (18) ou encore auprès du corps de base (2) et en ce que de préférence le contre-vérin (19) est chargé sous force de ressort pour son positionnement de travail.

6. Distributeur de fluide selon une des revendications précédentes, caractérisé en ce que les vérins (18, 19) du mécanisme de commutation (17) s'enchaînent à engagement positif ou encore essentiellement sans jeu en direction du mouvement de commutation dans approximativement tous les positionnements réciproques, en ce que notamment l'entraîneur à pas (23) présente au moins une hélice (24) et un curseur (25) étant en prise avec celle-ci et en ce que de préférence le contre-vérin (19) est situé avec un écart entre les extrémités du vérin (18) ou encore dans le domaine d'un plan médian commun d'au moins deux sorties de fluide (8), et/ou en ce qu'au moins un vérin (18, 19) du mécanisme de commutation (17) est disposé dans une chambre de commande (20) qui est essentiellement fermée contre un échange de fluide avec les conduites de fluide (9), en ce que notamment la chambre de commande (20) est fermée avec au moins un joint en fente (28, 29), qui est formé par des surfaces de glissement, par rapport à la conduite de fluide (9) et en ce que de préférence la chambre de commande (20) présente des ouvertures de montage, se trouvant à distance l'une par rapport à l'autre, dont une est fermée au moyen d'un raccord d'actionnement pour un vérin (18) et une autre est fermée au moyen d'un couvercle (5) du corps de base (2), un arrêt terminal pour au moins un vérin (18, 19) ou encore le contre-élément d'accouplement (32).

7. Distributeur de fluide selon une des revendications précédentes, caractérisé en ce que des moyens de rappel (26, 33) sond disposés dans une chambre (20) essentiellement fermée par rapport aux conduites de fluide, en ce que notamment un ressort de rappel (26) pour le mécanisme de commutation (17) et un ressort de rappel (33) pour l'accouplement (30) sont disposés dans des chambres distinctes ou encore dans le même axe et en ce que de préférence la chambre de commande (20), logeant au moins un ressort de rappel (33), présente seulement sur le côté supérieur le joint en fente (28, 29) adjacent aux conduites de fluide (9), et/ou en ce qu'un actionnement (16) présente un actionnement fluidique, en ce que notamment un piston d'actionnement (36) de l'actionnement fluidique présente une ampleur extérieure plus grande par rapport au mécanisme de commutation (17) ainsi qu'il entoure, en projection parallèle à l'axe du piston (10), le mécanisme de commutation (17) ou encore au moins une partie du domaine de barrage (11) à la circonférence extérieure et en ce que de préférence le piston d'actionnement (36) est réalisé en tant que piston creux en forme de cuvette, dont la surface frontale (39) intérieure est opposée au mécanisme de commutation (17) ou encore au domaine de barrage (11), une tige de piston (41) portant le vérin (18) saillant en substance seulement au-delà de la surface frontale (39) intérieure du piston, avec un écart à l'intérieur de la circonférence extérieure du piston d'actionnement (36).

8. Distributeur de fluide selon une des revendications précédentes, caractérisé en ce qu'un domaine de barrage (11) pour le fluide, entre une chambre à pression d'entrée (34) et des sorties de fluide (8) présente des ouvertures de barrage (12) ainsi qu'un organe de barrage (13), qui est à déplacer par rapport à celles-ci dans différentes positions de commutation, avec une conduite de passage (50), laquelle dégage en substance totalement, dans le respectif positionnement de commande, une ouverture de barrage (17) pour la formation d'une section de service transversale d'écoulement, en ce que notamment l'organe de barrage (13) ferme, dans l'état initial, des ouvertures de barrage (12) sous une force de poids ou encore de ressort et en ce que de préférence l'organe de barrage (13) fait prise à l'intérieur du piston d'actionnement (36), et/ou en ce que un organe de barrage (13) du domaine de barrage (11) et un piston d'actionnement (36) de l'actionnement (16) sont joints au moyen d'au moins un élément d'accouplement (45, 46), adjacent à la circonférence intérieure du piston d'actionnement (36), d'un accouplement coulissant (44), en direction du mouvement de commutation à engagement positif ainsi que réciproquement axialement déplaçables, en ce que notamment l'organe de barrage (13) fait prise dans le piston d'actionnement (36) avec un élément de logement (48), qui est joint en positionnement rigide avec un disque de barrage (14), lequel élément de logement se trouve essentiellement à l'intérieur de la circonférence extérieure du piston d'actionnement (36) et en ce que de préférence l'organe de barrage (13) est logé de manière mobile en substance directement auprès d'une butée (49) en positionnement fixe par rapport au corps de base (2) ou encore sur la circonférence extérieure d'une enveloppe (22) qui délimite la chambre de commande (20).

9. Distributeur de fluide selon une des revendications précédentes, caractérisé en ce que la surface frontale de piston (39) effective d'un piston d'actionnement (36) d'un actionnement (16) se trouve en substance directement à l'opposé d'au moins une partie d'une conduite de passage (50) d'un organe de barrage (13) d'un domaine de barrage (11) pour le fluide, en ce que notamment l'enveloppe de piston (37) du piston d'actionnement (36) recouvre la conduite de passage (50) et en ce que de préférence un accouplement coulissant (44) forme entre le piston d'actionnement (36) et l'organe de barrage (13) un raccord de conduite entre une chambre d'entrée à pression (34) et la surface frontale de piston (39) effective ou encore a une ampleur maximale, qui se trouve approximativement dans un ordre de grandeur d'un cercle partiel, sur lequel sont disposées des ouvertures de barrage (12) de sorties de fluide (8) avec leurs axes médians, et/ou en ce que la distribution de fluide est actionnable par une prise manuelle directe par une manette (40) qui est logée sur le corps de base (2), en ce que notamment la manette (40) est raccordée en positionnement fixe avec un piston d'actionnement (36) de l'actionnement (16) ou encore avec un vérin (18) du mécanisme de commutation (17) et en ce que de préférence la manette (40) est réalisée d'une seule pièce avec le piston d'actionnement (36).

10. Distributeur de fluide selon une des revendications précédentes, caractérisé en ce qu'au moins un dispositif de visualisation (54, 57), qui est à lire du côté extérieur du distributeur de fluide, est prévu pour au moins un état opérationnel du distributeur de fluide (1), en ce que notamment un dispositif de visualisation (57) est prévu pour la pression fluidique et est actionné par un piston (36) et en ce que de préférence un piston d'actionnement (36) d'un actionnement (16) forme au moins un élément de visualisation linéairement mobile, qui s'étend de manière étanche du corps de base (2) au côté extérieur du distributeur de fluide (1), ou encore que l'élément de visualisation ou la manette (40) est recouverte par un couvercle (6), qui forme une fenêtre de visualisation (48) ainsi que facile à démonter sans destruction, du corps de base (2) et/ou en ce que des sorties de fluide (8) sont disposées en forme d'étoile autour d'un axe médian (10), en ce que notamment des sorties de fluide (8) sont disposées pour la formation commune aux conduites de raccordement de pieds d'appui approximativement de manière parallèle à une surface de stationnement (59) du distributeur de fluide (1) et directement limitrophe à celle-ci et en ce que de préférence l'entrée de fluide (7) est située parallèlement à des sorties de fluide (8) ans que plus haut par rapport à celles-ci.
